# EUROPEAN PATENT APPLICATION

(11) **EP 1 253 029 A2**
(43) Date of publication of application: **30.10.2002**
(21) Application number: 02007515.6
(22) Date of filing: 02.04.2002
(51) Int. Cl.: B60G 15/06, B60G 17/02

(54) **A vehicle suspension**

(30) Priority: 25.04.2001 JP 2001128490
(71) Applicant: YAMAHA HATSUDOKI KABUSHIKI KAISHA, Iwata-shi Shizuoka-ken (JP)
(72) Inventor: Sawai, Seiji, Iwata-Shi, Shizuoka-ken (JP); Sakai, Koji, Iwata-Shi, Shizuoka-ken (JP)
(74) Representative: Grünecker, Kinkeldey, Stockmair & Schwanhäusser Anwaltssozietät

(57) **Abstract**

The present invention relates to a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other, wherein said urging means is attachable on said cylinder tube irrespective of an external dimension of said pivot support means through a spacer provided between said cylinder tube and said urging means and/or said pivot support means is removably attached to said end of said cylinder tube.

## Description

The present invention relates to a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other.

One of the cylinder type dampers for use in vehicle suspensions is disclosed in a Japanese Unexamined Patent application No. Sho 55-51145 laid open by publication.

According to the above publication, a cylinder as a main component of the damper includes: a cylinder tube; a pivot portion secured to one end of the cylinder tube and pivoted on a wheel-side-located member; a piston inserted for free sliding in its axial direction and for dividing the interior of the cylinder tube into two oil chambers; a narrow passage for intercommunicating the two oil chambers; a piston rod extending from the piston and projecting out of the other end of the cylinder tube with its projected end being supported with a vehicle-body-side-located member; and oil filling the interior of the cylinder tube.

The urging means of the damper comprises an annular-shaped spring seat removably fitted over the cylinder tube from one side end of the cylinder tube and removably supported on the cylinder tube side, and a spring fitted over both of the cylinder tube and the piston rod and placed between the piston rod side and the spring seat to urge them in opposite, axial directions.

When impact forces are given, while the vehicle is running, from the road surface to the wheel-side-located member, the cylinder contracts while resisting the urging force of the urging means. At this time, the impact forces are damped as oil flows from one of the two oil chambers to the other. That is, impact forces transmitted from the road surface toward the member located on the vehicle body side are attenuated.

When the damper is to be attached to the vehicle body side member and the wheel side member, first, the projecting end of the piston rod is pivoted on the vehicle body side member. Next, the spring and the spring seat are fitted in succession over the pivot portion secured to the one end of the cylinder tube, and they are moved toward and fitted over the cylinder tube. Next, the spring seat is placed to be supported with the cylinder tube. At the same time, the spring is fitted between the piston rod side and the spring seat, so that the pivot portion at one end of the cylinder tube is pivoted with the wheel side member. Thus, the work of attaching the damper is completed.

In the work of attaching the damper, the spring seat is once fitted over the pivot portion secured to one end of the cylinder tube and then moved toward the cylinder tube. In recent years, however, the capacity of the damper is occasionally increased according to the increase in vehicle sizes. If the size of the pivot portion is increased accordingly, it is hard to fit the spring seat over the pivot portion, and so there is a concern that the damper is hard to attach.

It is an objective of the present invention to improve a vehicle suspension as mentioned above so as to facilitate the work of attaching the vehicle suspension to a vehicle body side member and to a wheel side member even if a damper capacity is increased.

This objective is solved according to the present invention by a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other, wherein said urging means is attachable on said cylinder tube irrespective of an external dimension of said pivot support means through a spacer provided between said cylinder tube and said urging means and/or said pivot support means is removably attached to said end of said cylinder tube.

It is an advantage to provide a vehicle suspension with a simple constitution without increasing a size of the damper.

According to a preferred embodiment, said urging means comprises an annular spring seat removably fitted from one side end over said cylinder tube and removably supported on a cylinder tube side, and a spring installed between a piston rod side and said spring seat.

According to still another preferred embodiment, said spacer is adapted to be an additional diameter of an outside round surface of said cylinder tube, and said spring seat is supported with said spacer.

Since said spacer is adapted to be said additional diameter of said outside round surface of said cylinder tube, it is advantage that an inner diameter of said spring seat is variable.

According to a further preferred embodiment, said spacer is cylindrical and removably supported on said cylinder tube by means of a retaining ring.

According to a further preferred embodiment, said spring seat is removably fitted over said spacer from one end side of said cylinder tube and removably supported with another retaining ring.

According to a further preferred embodiment, said spacer is provided with plural grooves into at least one of which is fitted a retaining ring whereby an initial resilient force of said spring is adjustable.

Since said spacer is provided with plural grooves, it is advantage that a supporting position in an axial direction of said spacer relative to said cylinder tube is adjustable.

According to a further preferred embodiment, said pivot support means is removably attached by means of a tightening member.

According to a further preferred embodiment, said tightening member comprises a screw hole, a bolt, and a lock nut for engaging with said bolt.

According to a further preferred embodiment, said screw is bored into a head cover of said cylinder tube, and said bolt projects from said pivot support means so as to be screwed into said screw hole.

Further preferred embodiments of the present invention are laid down in the further subclaims.

In the following, the present invention is explained in greater detail with respect to several embodiments thereof in conjunction with the accompanying drawings, wherein:
- FIG. 1: is an overall cross-sectional side view of the first preferred embodiment;
- FIG. 2: is a partial, enlarged view of FIG. 1;
- FIG. 3: shows the second preferred embodiment corresponding to FIG. 1;
- FIG. 4: shows the second preferred embodiment corresponding to FIG. 2;
- FIG. 5: shows the third preferred embodiment corresponding to FIG. 1; and
- FIG. 6: shows the third preferred embodiment corresponding to FIG. 2.

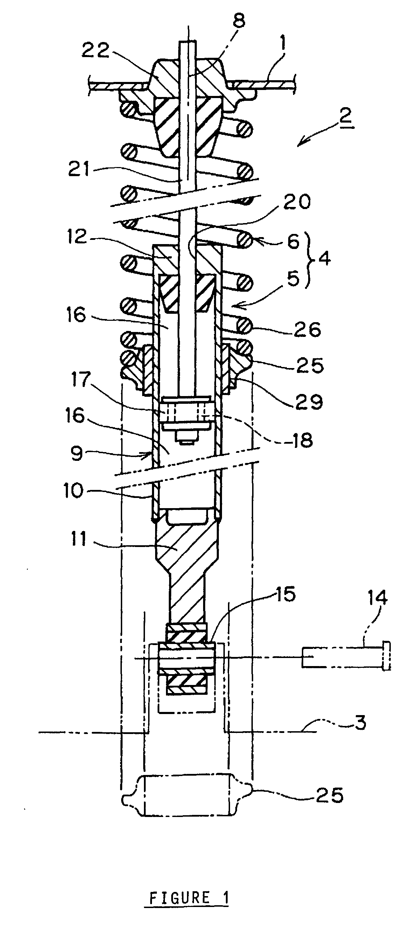

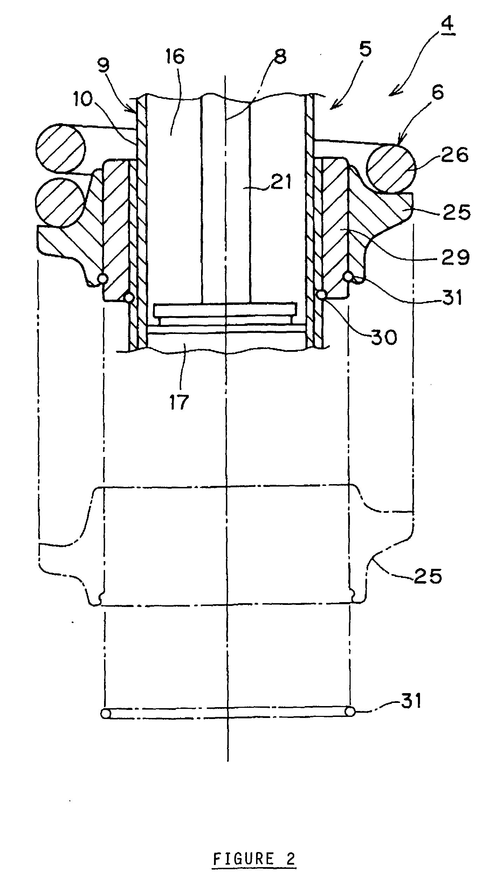

FIGs. 1 and 2 show the first preferred embodiment.

In reference to the drawings, a member 1 on the vehicle body side of a vehicle or an automobile. To the vehicle body side member 1 are attached paired right and left suspensions 2 which suspend wheel side members 3. The suspension 2 includes a damper 4 to alleviate impact forces given from the road surface to the vehicle body side member 1 through the wheel side member 3 and the suspension 2.

The damper 4 includes a hydraulic cylinder 5 as a main component of the damper 4, and a coil urging means 6 fitted over the cylinder 5 to urge the cylinder 5 to extend.

The cylinder 5 includes a cylinder tube 9 with its axis 8 extending in the vertical direction. The cylinder tube 9 comprises: a cylinder tube body 10 constituting the middle part, with respect to its vertical direction, of the cylinder tube 9, extending in a straight line having enhanced rigidity by means of a multiple (double) pipe structure; a head cover 11 secured to one (bottom) end of the cylinder tube body 10 to close its opening, and a rod guide 12 secured to the other (top) end of the cylinder tube body 10 to close its opening. The multiple pipe portion of the cylinder tube body 10 is made with the same outside diameter at each part in axial direction.

The cylinder 5 also includes: a pivot portion 15 secured to the end surface of one end of the cylinder tube 9, with the one end being pivoted through a pivot shaft 14 to the wheel side member 3; a piston 17 inserted for free axial sliding in the cylinder tube 9 and for dividing the interior of the cylinder tube 9 into two oil chambers 16, 16; a narrow passage 18 formed in the piston 17 to intercommunicate the oil chambers 16, 16; a piston rod 21, extending from the piston 17 placed on the axis 8, passing through a hole 20 formed in the rod guide 12, and projecting out of the other end of the cylinder tube 9; and oil for filling the interior of the cylinder tube 9.

The urging means 6 includes an annular spring seat 25, a pivot support member 22 attached to the projecting end of the piston rod 21 for pivoting the projecting end to the vehicle body side member 1, and a spring 26. The annular spring seat 25 is fitted over the cylinder tube 9 from its one end side on the axis 8 and supported removably on the cylinder tube 9. The pivot support member 22 is located on the axis 8 of the piston rod 21. The spring 26 is installed around the cylinder tube 9 and the piston rod 21, between the spring seat 25 and the pivot support member 22 to urge them in axial directions away from each other. That is, the cylinder 5 is forced to extend with the spring 26.

A cylindrical spacer 29 is located on the axis 8 and fitted over the cylinder tube 9 coaxially with it in the middle part, with respect to its axial direction, of the cylinder tube 9. The cylindrical spacer 29 is removably supported on the cylinder tube 9 by means of a retaining ring 30. The spacer 29 is made to extend radially outward from the general surface, or outside cylindrical surface of the cylinder tube 9, at every circumferential part of the cylinder tube.

The spring seat 25 is removably fitted over the spacer 29 from one end side of the cylinder tube 9 and removably supported with another retaining ring 31.

The action of the above damper 4, when an automobile runs, is the same as that described in reference to the prior art.

With the above constitution, the spacer 29 is supported with the cylinder tube 9 to be an additional diameter of the outside cylindrical surface of the cylinder tube 9, and the spring seat 25 is supported with the spacer 29.

Therefore, when the spacer 29 is supported in advance with the cylinder tube 9 in the production process of the damper 4, the process of mounting the damper 4 to the vehicle body side member 1 and to the wheel side member 3 is carried out for example as described below.

That is, first, the projecting end of the piston rod 21 is made to be supported on the vehicle body side member 1 using the pivot support member 22. Next, the spring 26 and the spring seat 25 are moved in succession from the position, outside the pivot support portion 15, shown with phantom lines in FIGs. 1 and 2 over the pivot support portion 15 secured to one end of the cylinder tube 9, and further moved toward the cylinder tube 9, so that they are fitted over the cylinder tube 9. Next, as shown with solid lines in FIGs. 1 and 2, the spring seat 25 is fitted over the spacer 29 so that the spring seat 25 is supported on the spacer 29. And the spring 26 is installed between the pivot support member 22 of the piston rod 21 side and the spring seat 25, followed by attaching the pivot support portion 15 to the wheel side member 3 by means of the pivot shaft 14, to complete the installation of the damper 4.

In relation to the above work of installing the damper 4, since the spring seat 25 is supported through the spacer 29 on the cylinder tube 9, the spring seat 25 may be made with a large inside diameter irrespective of the outside diameter of the cylinder tube 9 over which the spring seat 25 is to be fitted.

Therefore, even if the external size of the pivot support portion 15 is to be increased according to the intention of increasing the capacity of the damper 4, it is easy in mounting the damper 4, by increasing the inside diameter of the spring seat 25 accordingly, to fit the spring seat 25 over the pivot portion 15 from outside the pivot portion 15 and move it toward the cylinder tube 9. Therefore, in contrast to the prior art with which there is a possibility that the spring seat 25 cannot be fitted over due to increased size of the pivot support portion 15 related to the increase in the capacity of the damper 4, the above constitution facilitates the work of assembling the damper 4.

As described above, the spring seat 25 is removably supported on the spacer 29.

This makes it possible, when the spring 26 is damaged for example, to replace the spring 26 with a new one easily by removal and replacement of the spring seat 25 relative to the spacer 29.

As described above, the spacer 29 is formed in a cylindrical shape, fitted directly over the cylinder tube 9, and supported with the cylinder tube 9. And the spring seat 25 is fitted over the spacer 29 and supported with the spacer 29.

Since the spacer 29 is of a simple, cylindrical shape and the spring seat 25 is fitted over the spacer 29 and supported with the spacer 29, in the work of assembling the damper 4, it is possible to carry out radial positioning of the spring seat 25 easily and accurately.

Therefore, the work of assembling the damper 4 is constituted with simple steps more easily.

While the above example is described according to the drawings, the cylinder 5 may be placed upside down with one end of the cylinder tube 9 pivoted on the vehicle body side member 1 and with the projecting end of the piston rod 21 pivoted on the wheel side member 3. Alternatively, the spacer 29 centered on the axis 8 may be screwed to secure and support on the cylinder tube 9. In that way, the supporting position of the spacer 29 in the axial direction of the cylinder tube 9 is made adjustable relative to the cylinder tube 9. The adjustability makes it possible to adjust the initial resilient force of the spring 26. As another alternative, the spacer 29 may be made up of plural, small, arcuate members placed in the circumferential direction of the cylinder tube 9, and welded to the cylinder tube 9.

The following drawings show the second and third embodiments. Those embodiments have many points in common with the first embodiment in terms of constitution and effects. Therefore, the common points are provided with the same reference numerals in the drawings and explanation of them will be omitted, and mainly different points will be explained. It is also possible to make various combinations of constitutions of various parts in the embodiments in view of the object and effects of the invention.

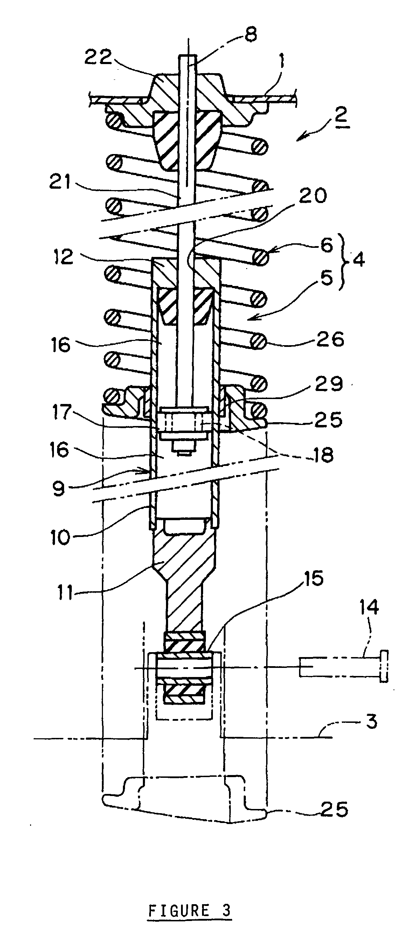

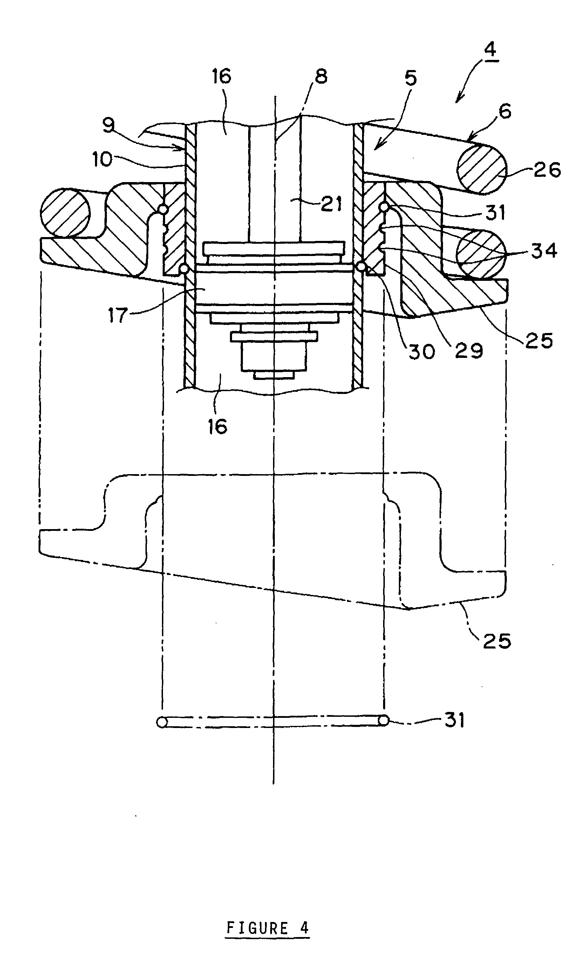

FIGs. 3 and 4 show the second preferred embodiment.

According to the second preferred embodiment, the spacer 29 is provided with plural grooves 34 into one of which is fitted a retaining ring 30, so that the supporting position in the axial direction of the spacer 29 relative to the cylinder tube 9 is adjustable for adjusting the initial resilient force of the spring 26.

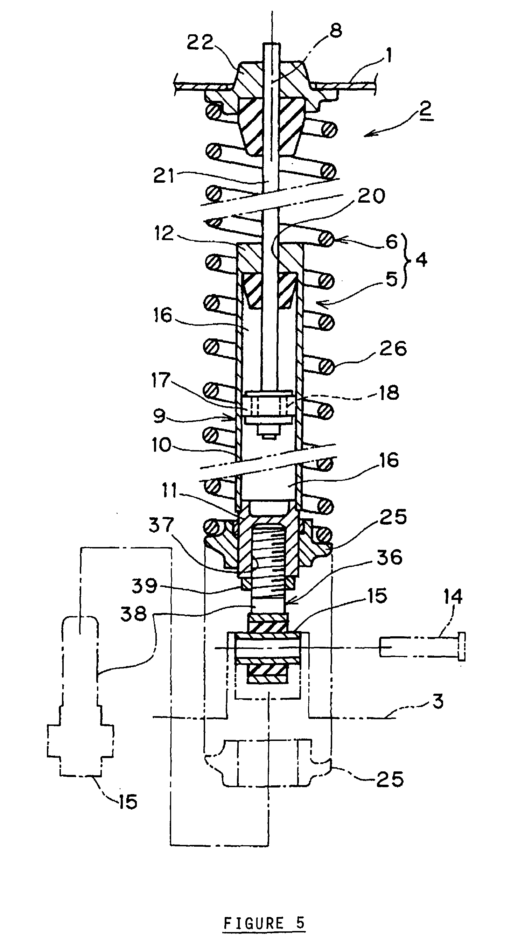

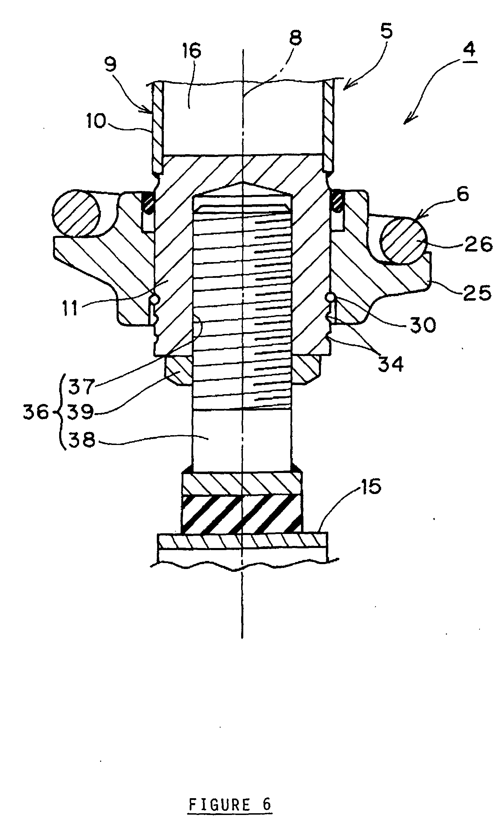

FIGs. 5 and 6 show the third preferred embodiment.

According to this preferred embodiment, the spring seat 25 is directly supported on the cylinder tube 9, and the pivot support portion 15 is removably tightened to one end of the cylinder tube 9 on the axis 8 by means of a tightening member 36.

The tightening member 36 comprises a screw hole 37 bored into the head cover 11 which is part of the cylinder tube 9 on the axis 8, a bolt 38 projecting from the pivot support portion 15 so as to be screwed into the screw hole 37 on the axis 8, and a locking nut 39 for engaging with the bolt 38.

With the above constitution, the process of mounting the damper 4 to the vehicle body side member 1 and to the wheel side member 3 is carried out for example as described below.

That is, first, the projecting end of the piston rod 21 is made to be supported on the vehicle body side member 1 using the pivot support member 22. On the other hand, the pivot support portion 15 is removed from one end of the cylinder tube 9 by loosening the locking nut 39 and the bolt 38 of the tightening member 36. In that state, the spring seat 25 is fitted from a position outside the one end of the cylinder tube 9 over the cylinder tube 9, so that the spring seat 25 is supported on the cylinder tube 9. The spring 26 is installed between the pivot support member 22 located on the piston rod 21 side and the spring seat 25. Next, the pivot support portion 15 is secured to the one end of the cylinder tube 9 by tightening the tightening member 36, and the pivot support portion 15 is pivoted on the wheel side member 3 by means of the pivot shaft 14 to complete the work of mounting the damper 4.

In the above mounting work for the damper 4, since it is unnecessary to fit the spring seat 25 over the pivot support portion 15 and move toward the cylinder tube 9 side, the inside diameter of the spring seat 25 may be set according to the outside diameter of the cylinder tube 9 irrespective of the external dimension of the pivot support portion 15.

Therefore, in contrast to the prior art arrangement which involved the possibility that the spring seat 25 cannot be fitted over the pivot support portion 15 because of increased external dimension of the pivot support portion 15 according to increased capacity of the damper 4, the above constitution facilitates the work of mounting the damper 4.

Also in the above case, it is unnecessary to increase the inside diameter of the spring seat 25 according to the external dimension of the pivot support portion 15.

Therefore, the work of assembling the damper 4 is carried out easily while preventing the damper 4 from increasing in size.

The effects of the invention are as follows.

According to a preferred embodiment, there is provided a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other, wherein said urging means is attachable on said cylinder tube irrespective of an external dimension of said pivot support means through a spacer provided between said cylinder tube and said urging means.

A spacer is supported with the cylinder tube so as to be an additional diameter of the outside round surface of the cylinder tube, and the spring seat is supported with the spacer.

Therefore, when the spacer is supported in advance with the cylinder tube, the work of mounting the damper to the vehicle body side member and the wheel side member can be carried out for example as follows.

That is, first, the projecting end of the piston rod is pivoted with the pivot member to said the other member. Next, the spring and the spring seat are passed in succession over the pivot support portion secured to the one end side of the cylinder tube, and moved toward the cylinder tube side, and fitted over the cylinder tube. Next, the spring seat is fitted over the spacer so that the spring seat is supported with the spacer. The spring is installed between the piston rod side and the spring seat, and the pivot support portion at one end of the cylinder tube is pivoted with said one member to complete the damper mounting work.

In the above case, since the spring seat is supported through the spacer on the cylinder tube, the inside diameter of the spring seat may be set to a sufficiently great value irrespective of the outside diameter of the cylinder tube over which the spring seat is to be fitted.

Therefore, even if the external dimension of the pivot support portion must be increased according to the intention of increasing the damper capacity, it is easy in the damper mounting work, by increasing the inside diameter of the spring seat, to fit the spring seat from outside the pivot support portion over the pivot support portion and move it toward the cylinder tube side. Therefore, in contrast to the prior art arrangement which involved the possibility that the spring seat cannot be fitted over the pivot support portion because of increased external dimension of the pivot support portion due to increased capacity of the damper, the above constitution facilitates the work of mounting the damper.

According to a preferred embodiment, the spacer is formed in a cylindrical shape, fitted over the cylinder tube so that the former is supported with the latter, and the spring seat is fitted over the spacer so that the former is supported with the latter.

Since the spacer is of a simple, cylindrical shape and the spring seat is fitted over the spacer and supported with the spacer, in the work of assembling the damper, it is possible to carry out radial positioning of the spring seat easily and accurately.

Therefore, the work of assembling the damper is constituted with simple steps more easily.

According to a further preferred embodiment, there is provided a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other, wherein said urging means is attachable on said cylinder tube irrespective of an external dimension of said pivot support means through said pivot support means is removably attached to said end of said cylinder tube.

Therefore, the work of mounting the damper to the vehicle body side member and to the wheel side member is made for example as follows.

That is, first, the projecting end of the piston rod is pivoted with the pivot member on the other member. Next, the pivot support portion is removed from the one end of the cylinder tube, the spring seat is fitted from a position outside one end of the cylinder tube over the cylinder tube, so that the spring seat is supported on the cylinder tube. The spring is installed between the piston rod side and the spring seat. The pivot support portion is secured to one end of the cylinder tube, so that the pivot support portion is pivoted on one end of the cylinder tube to complete the work of mounting the damper.

In the above mounting work for the damper, since it is unnecessary to fit the spring seat over the pivot support portion and move toward the cylinder tube side, the inside diameter of the spring seat may be set commensurate with the outside diameter of the cylinder tube irrespective of the external dimension of the pivot support portion.

Therefore, in contrast to the prior art arrangement involving the possibility that the spring seat cannot be fitted over the pivot support portion because of increased external dimension of the pivot support portion due to increased capacity of the damper, the above constitution facilitates the work of mounting the damper.

Also, in the above case, it is unnecessary to increase the inside diameter of the spring seat according to the external dimension of the pivot support portion.

Therefore, the work of assembling the damper is carried out easily while preventing the damper size from increasing.

According to still a further preferred embodiment, there is provided a vehicle suspension having at least a cylinder type damper, which comprises a cylinder tube; a piston rod projecting from one end of said cylinder tube; a pivot support means provided at another end of said cylinder tube; and an urging means for urging said cylinder tube and said piston rod away from each other, wherein said urging means is attachable on said cylinder tube irrespective of an external dimension of said pivot support means through a spacer provided between said cylinder tube and said urging means and said pivot support means is removably attached to said end of said cylinder tube.

Therefore, in the above case, the work of assembling the damper is facilitated through the choices between two different assembly alternative of the damper.

Finally, according to another preferred embodiment, there is provided a cylinder type of damper in a suspension for vehicles, and the damper comprises: a cylinder tube; a pivot support portion secured to one axial direction end of the cylinder tube and pivoted on one of a vehicle body side member and a wheel side member; a piston rod projecting from the other end of the cylinder tube with the projecting end pivoted on the other of the vehicle body side member and the wheel side member; an annular spring seat removably fitted from the one side end over the cylinder tube and removably supported on the cylinder tube side; and a spring installed between the piston rod side and the spring seat for urging the spring seat and the piston rod in axial directions away from each other, wherein a spacer is supported with the cylinder tube so as to be an additional diameter of the outside round surface of the cylinder tube and the spring seat is supported with the spacer, and/or wherein the pivot support portion is removably received to one end of the cylinder tube.

## Claims

1. A vehicle suspension having at least a cylinder type damper (4), which comprises:
a cylinder tube (9);
a piston rod (21) projecting from one end of said cylinder tube (9); a pivot support means (15) provided at another end of said cylinder tube (9); and
an urging means (6) for urging said cylinder tube (9) and said piston rod (21) away from each other,
**characterized in that** said urging means (6) is attachable on said cylinder tube (9) irrespective of an external dimension of said pivot support means (15) through a spacer (29) provided between said cylinder tube (9) and said urging means (6) and/or said pivot support means (15) is removably attached to said end of said cylinder tube (9).

2. A vehicle suspension according to claim 1, **characterized in that** said urging means (6) comprises an annular spring seat (25) removably fitted from one side end over said cylinder tube (9) and removably supported on a cylinder tube side, and a spring (26) installed between a piston rod side and said spring seat (25).

3. A vehicle suspension according to claim 1 or 2, **characterized in that** said spacer (29) is adapted to be an additional diameter of an outside round surface of said cylinder tube (9), and said spring seat (25) is supported with said spacer (29).

4. A vehicle suspension according to at least one of the preceding claims 1 to 3, **characterized in that** said spacer (29) is cylindrical and removably supported on said cylinder tube (9) by means of a retaining ring (30).

5. A vehicle suspension according to at least one of the preceding claims 1 to 4, **characterized in that** said spring seat (25) is removably fitted over said spacer (29) from one end side of said cylinder tube (9) and removably supported with another retaining ring (31).

6. A vehicle suspension according to at least one of the preceding claims 1 to 5, **characterized in that** said spacer (29) is provided with plural grooves (34) into at least one of which is fitted a retaining ring (30) whereby an initial resilient force of said spring (26) is adjustable.

7. A vehicle suspension according to at least one of the preceding claims 1 to 6, **characterized in that** said pivot support means (15) is removably attached by means of a tightening member (36).

8. A vehicle suspension according to claim 7, **characterized in that** said tightening member (36) comprises a screw hole (37), a bolt (38), and a lock nut (39) for engaging with said bolt (38).

9. A vehicle suspension according to claim 8, **characterized in that** said screw (37) is bored into a head cover (11) of said cylinder tube (9), and said bolt (38) projects from said pivot support means (15) so as to be screwed into said screw hole (37).
